(19) **Europäisches Patentamt**

**European Patent Office**

**Office européen des brevets**

(11) **EP 1 424 578 A1**

(12) **EUROPEAN PATENT APPLICATION**

(43) Date of publication:
**02.06.2004 Bulletin 2004/23**

(51) Int Cl.⁷: **G02B 6/124**, G02B 6/293

(21) Application number: **02360329.3**

(22) Date of filing: **28.11.2002**

| (84) Designated Contracting States: **AT BE BG CH CY CZ DE DK EE ES FI FR GB GR IE IT LI LU MC NL PT SE SK TR** Designated Extension States: **AL LT LV MK RO SI** | (72) Inventors: • **Münzner, Roland** 73266 Bissingen/Teck (DE) • **Wessel, Rudolf** 70372 Stuttgart (DE) |
|---|---|
| (71) Applicant: **Avanex Corporation** Fremont, CA 94538 (US) | (74) Representative: **Haines, Miles John et al** D. Young & Co. 21 New Fetter Lane London EC4A 1DA (GB) |

(54) **Optical band filter using a tandem of arrayed waveguide gratings**

(57)     An optical band filter (1) comprises a first and a second arrayed waveguide grating (AWG) (2, 3) each connected to a first and a second free space region (4, 5, 6, 7), wherein the second free space region (5) of the first AWG (2) is located adjacent to the first free space region (6) of the second AWG (3), with a spatial filter (iris 9, aperture 10) being provided between the second free space region (5) of the first AWG (2) and the first free space region (6) of the second AWG (3), and wherein a semi-transparent region (15) is provided between the second free space region (5) of the first AWG (2) and the first free space region (6) of the second AWG (3). This filter serves to approximate a rectangularly shaped band filter characteristic in DWDM systems with minimized chromatic dispersion.

Fig. 1

EP 1 424 578 A1

**Description**

Background of the invention

The invention relates to an optical band filter comprising a first and a second arrayed waveguide grating (AWG), each connected to a first and a second free space region, wherein the second free space region (in the direction of light transmission) of the first AWG is located adjacent to the first free space region (in the direction of light transmission) of the second AWG, with a spatial filter being provided between the second free space region of the first AWG and the first free space region of the second AWG.

The demand for higher and higher communication and computer data rates implies a constant need for newer and better technologies to support that demand. One such technology area is fiber-optic communications, in which data is transmitted as light energy over optical fibers. To increase data rates, more than one data channel can be placed on a single fiber link. For example, in wavelength division multiplexing (WDM), the different channels are differentiated by wavelength or color. Such techniques require special components to combine and/or separate the different channels for transmission, switching, and/or receiving. For example, a component for separating channels of a WDM stream would separate light into the distinct wavelength bands that correspond to the different channels. For each channel, the frequency response of an ideal channel separator would be a perfectly flat passband that would transmit all of the light energy for the corresponding channel and only that light energy. In an ideal channel separator, the separation between channels would be distinct. In other words, the channels would be isolated from each other so that there is no crosstalk (i.e., no light energy from one channel spilling into another channel).

An arrayed waveguide grating is an optical device that can be used to combine and/or separate light energy of different wavelengths. An arrayed waveguide grating selectively routes light of a particular wavelength from an input port to an output port. When used to route light of differing wavelengths from more than one input port and/or to more than one output port, an arrayed waveguide grating can be used to operate as an optical multiplexer and/or demultiplexer that combines and/or separates light energy of different wavelengths.

Optical band filters approximating rectangular filter characteristics, i.e. showing a broad flat top shape with steep decay at the passband edges, are key components for dense wavelength division multiplexing (DWDM) optical telecomunication systems. They are of particular interest for minimizing the number of channels lost between two wavebands when demultiplexing optical wavebands comprising a number of adjacent DWDM channels.

Neither arrayed waveguide gratings (AWG) nor lattice filters as stand alone solutions exhibit a high flexibility in tailoring flat passbands with steeply decaying edges. In US 6,289,147 B1 a combination of a single Mach-Zehnder interferometer (MZI) and an AWG has been suggested. As linking element between both devices a multi mode interference (MMI) device is provided. The linear phase shift provided by the MZI device which ends in an MMI section in front of the star coupler offers the possibility of (partially) compensating the angular dispersion of the AWG by spatially shifting the electromagnetic field, leaving the MMI and entering the first star coupler of the AWG. Thus a flat top characteristic at low insertion loss can be achieved. The 'steepness' of the decay of the passbands, however, can not be addressed independently. The combination of an MZI and an AWG further suffers from a lack of flexibility for the spatial shift of the MMI field, i.e. the input field of a star coupler at the input of the AWG.

As a second approach in US 5,488,680 and US 5,926,587 suggest an integrated optical device for selectively routing light energy by wavelength, comprising two AWGs in cascade separated by a spatial filter adapted to attenuate light energy corresponding to side-lobe images generated by one or both AWGs, wherein each AWG comprises two free spaces separated by a plurality of router arms. This approach offers the possibility of completely compensating the angular dispersion of the two cascaded AWGs, however it suffers from passband ripple due to intensity variations of the image of the first AWG, and from a penalty in chromatic dispersion due to a spatial variation of the optical path length over the joining section of the two free space regions arranged next to each other.

Object of the invention

It is the object of the invention to provide a device to approximate a rectangularly shaped band filter characteristic in DWDM systems with minimized passband ripple, minimized chromatic dispersion throughout the entire passband, and minimized insertion loss.

Short description of the invention

This object is achieved by an optical band filter comprising a first and a second arrayed waveguide grating (AWG) each connected to a first and a second free space region, wherein the second free space region of the first AWG is located adjacent to the first free space region of the second AWG, with a spatial filter being provided between the second free space region of the first AWG and the first free space region of the second AWG, wherein a semi-transparent region is provided between the second free space region of the first AWG and the first free space region of the second AWG.

In order to eliminate neighbouring orders of the image field coming from the first AWG, a spatial filter is placed between the second free space region of the first AWG and the first free space region of the second AWG, which effectively connects the AWGs to one another, leaving a transparent section equal to or smaller than the area covered by the angular dispersion of one grating order of the image field of the first AWG. With the angular dispersions of the two AWGs being compensated, this spatial filtering thus provides for a band filter with a large band width and steep decays of the passbands at the same time. If a semi-transparent region, which is equivalent to a semi-absorbing region, is provided between the first free space region and the second free space region it is guaranteed that the input field to the second AWG remains always at the same amplitude. Thus, a ripple in the flat-top passband is avoided. Hence, intensity variations of the image field of the first AWG when being displaced (as function of the wavelength) over the aperture of the iris can be compensated due to the attenuation changing with the depth of the semi-transparent region. Furthermore, the spatially varying phase mismatch due to the spatially varying distance between the second free space region of the first AWG and the first free space region of the second AWG, put tangent to each other, can be overcome by using a slightly different (usually larger) refractive index for the semi-transparent insertion than for the core layer of the slab waveguide. Thus, chromatic dispersion is minimized. The difference in refractive index should be small enough that refraction effects can be tolerated. The spatial shape of the semi-transparent region must be chosen such that the phase mismatch between the two tangent free space regions is turned into a constant phase. Preferably, the semi-transparent region has an ellipitcal or lense-like shape or the shape of two gaussian profiles.

In order to filter several wavelength bands, the free spectral range of the first AWG is adapted to the channel spacing of the second AWG.

In a preferred embodiment of the invention the first AWG is a periodic arrayed waveguide grating and the second AWG is a standard arrayed waveguide grating. A cascade of the two serves as a passive optical band filter for demultiplexing purposes in DWDM systems. The free spectral range of an optical device is the wavelength difference over which the spectral characteristics repeat, generally corresponding to the next higher multiple of the optical wavelength. At higher orders of a grating the free spectral range becomes increasingly narrow. In an AWG the free spectral range corresponds to the spectral resolution between two refractive orders. The spectral resolution of an AWG is used to spectrally separate the narrow wavelength bands, i.e. the channels of the AWG. In a standard AWG the wavelength band used in its output channels is much smaller than the free spectral range. In a periodic AWG the free spectral range exactly corresponds to the width of the used wavelength band, i.e.:

Number of channels X channel spacing = free spectral range

Due to the periodic nature of the first AWG with its free spectral range equal to the channel spacing of the second AWG the spatial filter located between the second free space region of the first AWG and the first free space region of the second AWG can be designed in such a way that only the image emerging form the current grating order is 'visible' to the second AWG, i.e. serving as its input field. The image produced by the second AWG thereby remains stationary at a specific output channel. After one channel spacing of the second AWG is passed, the previously blocked image field of the adjacent order of the AWG comes into the spatial filter while the previous order image disappears and automatically the image produced by the second AWG comes to be centred at an adjacent output channel.

It is particularly advantageous if the second free space region of the first AWG and the first free space region of the second form a joint slab region. Thus, the region connecting the first and second AWG can be made of two adjacent slab waveguides being tangent to one another with the spatial filter being located between the two. In particular, the joining region can be designed as a star coupler with two slab regions tangent to one another, where in this double slab waveguide the spatial filter is provided in the plane tangent to both slab regions. Using slab waveguides as first and second free space region has the advantage that the optical band filter can be realized as a fully integrated optical device using planar elements.

If the first free space region provided at the input of the first AWG and the second free space region provided at the output of the second AWG are star couplers, an input signal can be coupled into the first AWG and an output signal can be coupled out of the second AWG.

In a particularly preferred embodiment, the spatial filter is realized as an iris with an aperture, wherein the semi-transparent region is located within the aperture. By using an iris one can make sure that only the image emerging form the one grating order of the first AWG is transferred as an input field to the second AWG. The steep decay of the passbands is guaranteed by the fast coverage of the image of the first AWG by the iris due to the angular dispersion of the first AWG.

The idea of the invention is also realized in a waveguide chip comprising a substrate, in particular of silicon, and a silica layer provided on the substrate, wherein the optical band pass filter described above is provided in the silica layer. Thus the optical band pass filter to obtain low overall insertion loss, low passband ripple and low chromatic dispersion can be realized using passive planar optical devices. Thus the whole waveguide chip can be realized as a planar waveguide chip. Semiconductor materials such as InP and GaAs can also be used as substrates. Oxides other than silica, polymers and fibers etc. can be used as layers in which the optical band filter is realized.

In a preferred embodiment an iris is provided between the first free space region and the second free space region, where the iris is made of absorbing material filled into a slit in the silica layer. To this end, after manufacturing the other components of the optical band filter, a deep slit is etched into the silica layer down to the substrate. This slit is then filled with an absorbing material for the iris, preferably with a polymer. Materials such as silicone or epoxy can be used.

The semi-transparent material provided between the second free space region of the first AWG and the first free space region of the second AWG is filled into a slit in the silica layer which preferably is realized by deep etching. Advantageously, the same slit as for the iris is used and the semi-transparent layer constitutes a fill-in in the aperture of the iris. Typically, a grey or black polymer is used, the refractive index of which is adapted to the refractive index of the adjacent slab waveguide in order to avoid undesired effects due to reflection.

In accordance with the invention is also a wavelength division multiplexing communications system comprising an optical band filter and/or a planar waveguide chip described above. Such a wavelength division multiplexing communications system minimizes the number of channels lost between two wave bands when demultiplexing optical wavebands.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

Drawings

The invention is shown in the drawing.

**Fig. 1** shows a schematic representation of an optical band filter device; and

**Fig. 2** shows the principle of functionality of the inventive optical band filter.

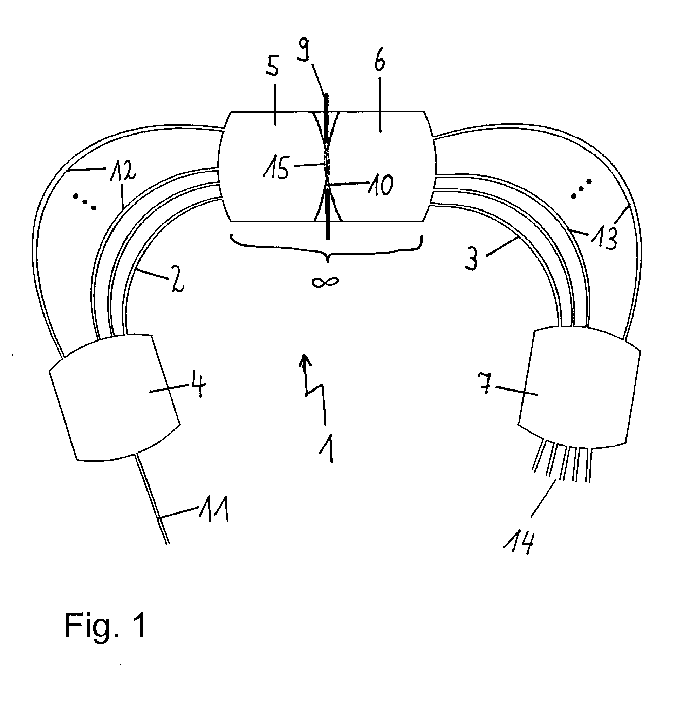

**Fig. 1** shows a schematic drawing of an optical band filter device **1** built up from a combination of a first arrayed waveguide (AWG) **2** implemented as a periodic AWG and a second AWG **3** implemented as a standard AWG. Thereby the first AWG 2 is periodic with a free spectral range equal to the channel spacing of the second AWG 3. The first and second AWG 2, 3 are each connected to a first **4, 5** and a second **6, 7** free space region. The second free space region 5 of the first AWG 2 and the first free space region 6 of the second AWG 3 are implemented as slab waveguides. Together they form a star coupler **8**. In order to eliminate neighbouring orders of the image field coming from the first AWG 2, a spatial filter in form of an iris **9** with an aperture **10** is placed between the second free space region 5 and the first free space region 6, leaving a transparent section equal to or smaller than the area covered by the angular dispersion of one grating order of the first AWG 2. With its input, the first AWG 2 is connected to the first free space region 4 implemented as a star coupler, where an incident light beam from a fiber or waveguide **11** is separated into different wavelengths and fed into the waveguides **12** of different lengths of the first AWG 2. At the output of the second AWG 3 is provided the second free space region 7 implemented as a star coupler for receiving light from waveguides **13** having different lengths and for feeding the light energy corresponding to a specific passband into different output channels **14.** A partially transparent region **15,** of e.g. elliptical shape, is placed in between the two parts (second free space region 5 and first free space region 6) of the star coupler 8 in order to compensate the amplitude variation of the image field of the periodic AWG 2 and the spatially varying phase mismatch between the tangent free space regions 5 and 6. The semi-transparent region 15 is placed as insert in the aperture 10 provided in the iris 9.

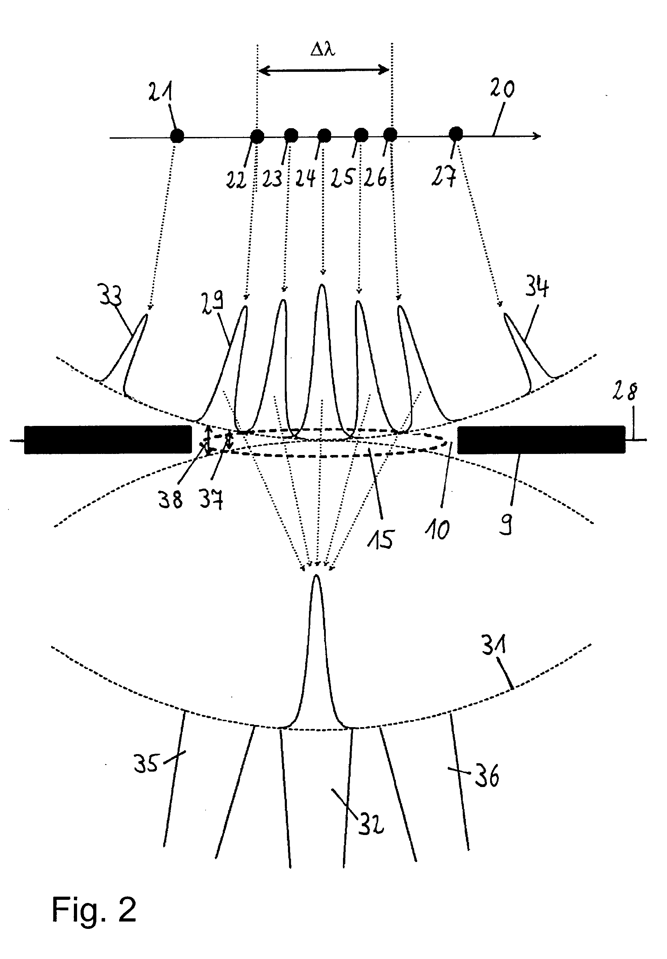

**Fig. 2** shows the principle of functionality of the optical band filter built up of a standard AWG 3 cascaded to a periodic AWG 2. If elements of Fig. 1 are referred to, the same numerals are used. The arrow **20** indicates the direction of increasing wavelength. The dots 21 - 27 indicate discrete wavelengths, where the dots 22 - 26 correspond to the signal launched at the input of the periodic AWG (AWG 2), which produces a focussed image on the (virtual) sphere being tangent to the (virtual) middle **28** separating the second free space region 5 connected to the periodic AWG 2 and the first free space region 6 connected to the standard AWG 3. The field amplitudes **29** correspond to the wavelengths 22 - 26. The focussed image on the sphere being tangent to the middle 28 serves as input field for the standard AWG 3. The angular dispersion of the periodic AWG 2 is arranged in such a way that it just compensates the angular dispersion of the standard AWG 3. Therefore, the lateral displacement of the image produced by the periodic AWG 2 at the aperture 10 of the iris 9 causes the image field of the standard AWG 3, arriving at the output side sphere **31** of the second free space region 5, always to be centred at the corresponding output waveguide **32.** Due to the periodic nature of the first AWG 2 with its free spectral range equal to the channel spacing $\Delta\lambda$ of the standard AWG 3, the iris 9 in the centre of the star coupler 8 can be designed in such a way that only the current grating order is 'visible' to the standard AWG 3, i.e. serving as its input field. After one channel spacing of the standard AWG 3 is passed, the previously blocked, adjacent order of the image field of the periodic AWG (dots 21 or 27 on arrow 20 and corresponding field amplitudes **33** or **34**) comes into the aperture 10 of the iris 9, while the previous order image disappears. Automatically, the image produced by the standard AWG 3 becomes centred at the adjacent output channel (**35** or **36**). Furthermore, the semi-transparent region 15 within the iris 9 guarantees by its spatial variation of attenuation that the input fields to the standard AWG 3 always remain at the same amplitude and thus a ripple in the flat-top passband is avoided. The steep decay of the passbands is guaranteed by the fast coverage of the image of the periodic AWG 2 by the iris 9 due to the angular dispersion of the first AWG. Finally, the spatially varying phase mismatch due to the spatially varying distance **37, 38** between the two joint slab waveguides forming the star coupler 8 can be overcome by using a slightly different (usually larger) refractive index for the semi-transparent region 15 than for the core layer of the slab waveguide. Thus, the combination of the non changing shape of the image field of the periodic AWG 2 during displacement, leading to minimisation of passband ripple, and of the unchanged phase properties of the image under displacement, leading to minimisation of chromatic dispersion, is achieved. The passband shape of the whole device is given by the quality of the compensation of angular dispersion and does not depend on the shape of the input field to the periodic AWG 2. Therefore, a very narrow 'image field' produced by the periodic AWG 2 at the iris 9 can be realized, which then guarantees a fast coverage of this image by the iris 9. This leads to extremely steep band edges.

**Claims**

1. Optical band filter (1) comprising a first and a second arrayed waveguide grating (AWG) (2, 3) each connected to a first and a second free space region (4, 5, 6, 7), wherein the second free space region (5) of the first AWG (2) is located adjacent to the first free space region (6) of the second AWG (3), with a spatial filter (iris 9, aperture 10) being provided between the second free space region (5) of the first AWG (2) and the first free space region (6) of the second AWG (3), **characterized in that** a semi-transparent region (15) is provided between the second free space region (5) of the first AWG (2) and the first free space region (6) of the second AWG (3).

2. Optical band filter according to claim 1, **characterized in that** the free spectral range of the first AWG (2) is adapted to the channel spacing of the second AWG (3),

3. Optical band filter according to claim 1, **characterized in that** the first AWG (2) is a periodic arrayed waveguide grating and the second AWG (3) is a standard arrayed waveguide grating.

4. Optical band filter according to claim 1, **characterized in that** the first free space region (6) of the second AWG (3) and the second free space region (5) of the first AWG (2) form a joint slab region.

5. Optical band filter according to claim 1, **characterized in that** the first free space region (4) provided at the input of the first AWG (2) and the second free space region (7) provided at the output of the second AWG (3) are star couplers.

6. Optical band filter according to claim 1, **characterized in that** the spatial filter is realized as an iris (9) with an aperture (10), wherein the semi-transparent region (15) is located in the aperture (10).

7. Waveguide chip comprising a substrate, in particular of silicon, a silica layer provided on the substrate, wherein the optical band pass filter (1) according to claim 1 is realized in the silica layer.

8. Waveguide chip according to claim 7, **characterized in that** an iris (9) is provided between the second free space region (5) of the first AWG (2) and the first free space region (6) of the second AWG (3), where the iris (9) is made of absorbing material filled into a slit in the silica layer.

9. Waveguide chip according to claim 7, **characterized in that** the semi-transparent material provided between the second and the first free space region (5, 6), is filled into a slit in the silica layer.

10. Wavelength division multiplexing communications system comprising an optical band filter (1) according to claim 1.

Fig. 1

Fig. 2

European Patent Office

**EUROPEAN SEARCH REPORT**

Application Number

EP 02 36 0329

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 826 989 A (NIPPON TELEGRAPH & TELEPHONE) 4 March 1998 (1998-03-04) <br> * figures 8-10,48 * <br> * page 14, line 10 - page 15, line 42 * <br> * page 24, line 24 - line 32 * <br> * page 20, line 26 - line 35 * <br> --- | 1,3-5,7 | G02B6/124 <br> G02B6/293 |
| X | US 611 996 A (GEORGE HORACE BROOKE THOMSON) 29 August 2000 (2000-08-29) <br> * figures * <br> * column 1, line 4 - line 15 * <br> * column 3, line 47 - column 6, line 9 * <br> --- | 1,2,4,5, 7,10 | |
| X | EP 1 111 416 A (NORTEL NETWORKS LTD) 27 June 2001 (2001-06-27) <br> * column 6, line 22 - column 12, line 17 * <br> * figures 1-7,9 * <br> --- | 1,3-5,7 | |
| X | EP 0 901 025 A (LUCENT TECHNOLOGIES INC) 10 March 1999 (1999-03-10) <br> * column 3, line 52 - column 7, line 55 * <br> * claims * <br> ----- | 1,4,6,7, 10 | |

TECHNICAL FIELDS SEARCHED (Int.Cl.7)

G02B

The present search report has been drawn up for all claims

| Place of search | Date of completion of the search | Examiner |
|---|---|---|
| THE HAGUE | 9 May 2003 | Mathyssek, K |

EPO FORM 1503 03 82 (P04C01)

**ANNEX TO THE EUROPEAN SEARCH REPORT
ON EUROPEAN PATENT APPLICATION NO.**                    EP 02 36 0329

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2003

| Patent document cited in search report | | Publication date | Patent family member(s) | | Publication date |
|---|---|---|---|---|---|
| EP 0826989 | A | 04-03-1998 | EP<br>JP<br>JP<br>US<br>US | 0826989 A2<br>11095051 A<br>2002250828 A<br>6456760 B1<br>6122419 A | 04-03-1998<br>09-04-1999<br>06-09-2002<br>24-09-2002<br>19-09-2000 |
| US 611996 | A | | NONE | | |
| EP 1111416 | A | 27-06-2001 | US<br>CA<br>EP | 6301409 B1<br>2322143 A1<br>1111416 A1 | 09-10-2001<br>23-06-2001<br>27-06-2001 |
| EP 0901025 | A | 10-03-1999 | US<br>EP<br>JP | 5926587 A<br>0901025 A2<br>11174250 A | 20-07-1999<br>10-03-1999<br>02-07-1999 |

EPO FORM P0459

For more details about this annex : see Official Journal of the European Patent Office, No. 12/82